# EUROPEAN PATENT SPECIFICATION

(11) **EP 0 341 315 B1**
(45) Date of publication and mention of the grant of the patent: **19.01.1994**
(21) Application number: 88909365.4
(22) Date of filing: 28.10.1988
(51) Int. Cl.: H01S 3/137

(54) **METHOD OF STABILIZING LASER WAVELENGTH AND LASER DEVICE WITH STABILIZED WAVELENGTH**
VERFAHREN ZUR STABILISIERUNG DER LASERWELLENLÄNGE UND SO STABILISIERTE LASERANORDNUNG
PROCEDE DE STABILISATION DE LA LONGUEUR D'ONDE D'UN LASER ET LASER A LONGUEUR D'ONDE STABILISEE

(30) Priority: 28.10.1987 JP 274579/87; 13.01.1988 JP 6125/88; 13.01.1988 JP 6126/88; 13.01.1988 JP 6128/88; 18.01.1988 JP 9043/88
(43) Date of publication of application: 15.11.1989
(73) Proprietor: MITSUBISHI DENKI KABUSHIKI KAISHA, Tokyo 100 (JP)
(72) Inventor: NAKATANI, Hajime Mitsubishi Denki Kabushiki, 8-chome Amagasaki-shi Hyogo 661 (JP); MINOWA, Yoshibumi Mitsubishi Denki Kabushiki, 8-chome Amagasaki-shi Hyogo 661 (JP); KANEKO, Hiromi Mitsubishi Denki Kabushiki, honmachi 8-chome Amagasaki-shi Hyogo 661 (JP); WAKATA, Hitoshi; Mitsubishi Denki Kabushiki, 8-chome; Amagasaki-shi; Hyogo 661 (JP); HARUTA, Kenyu; Mitsubishi Denki Kabushiki, 8-chome; Amagasaki-shi; Hyogo 661 (JP); NAGAI, Haruhiko; Mitsubishi Denki Kabushiki, 8-chome; Amagasaki-shi; Hyogo 661 (JP); YASUDA, Kenichi Mitsubishi Denki Kabushiki, 8-chome Amagasaki-shi Hyogo 661 (JP); MUKUMOTO, Hiroyuki; Mitsubishi Denki Engineering, machi 8-chome,Amagasaki-shi, Hyogo 661 (JP)
(74) Representative: Crawford, Fiona Merle
(86) International application number: PCT/JP88/01102
(87) International publication number: WO 89/04075

(56) References cited:
- WO-A-80/7276
- FR-A- 2 598 815
- JP-A- 6 016 479
- JP-A-63 160 287
- JP-B- 6 237 893

## Description

This invention relates to a method of stabilizing laser wavelength and laser device with stabilized wavelength.

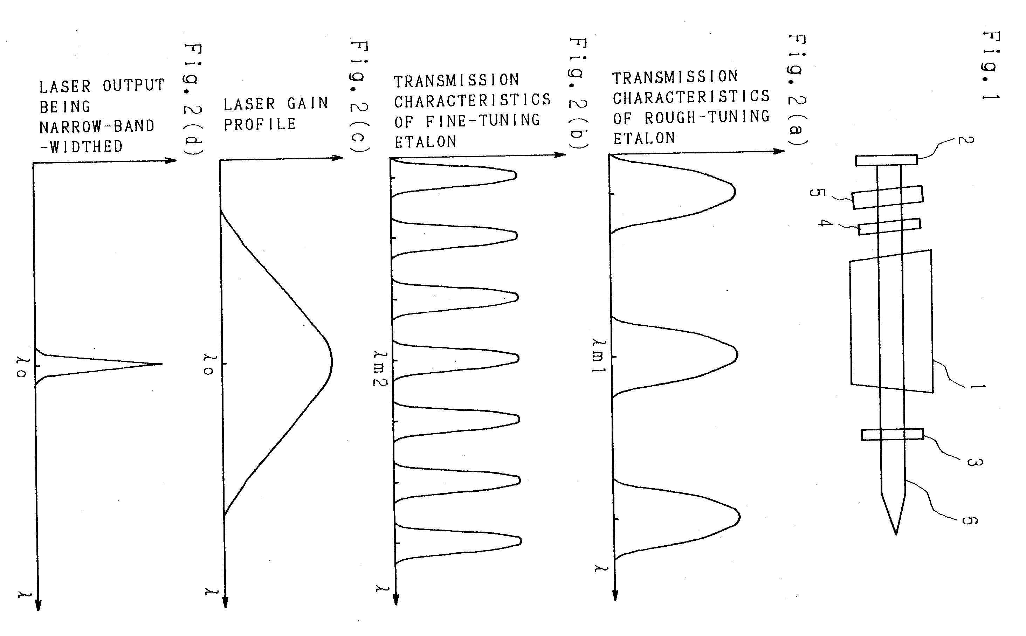

Fig. 1 of the accompanying drawings is a structural view showing a conventional narrow band width laser shown, for example, in a magazine called "CAN. J. PHYS. VOL63('85) 214".

In the figure, reference numeral 1 is a laser medium, 2 is a full reflection mirror, 3 is an incomplete reflection mirror, 4 is a etalon for rough tuning, 5 is a etalon for fine tuning, and 6 is a laser beam.

Next, explanation is made on the operation thereof. In Fig. 1, normally, laser medium 1 is surrounded by a light resonator consisting of the full reflection mirror 2 and incomplete reflection mirror 3, and light is amplified while making round trips in the light resonator numerous times then is taken out as laser beam 6. By the way, some of the laser resonators, for example, excimer laser, semiconductor laser, pigment laser and some kinds of solid state lasers, have wide oscillating wavelength width. By inserting spectroscopy elements into the light resonator, their oscillating wavelength width can be narrowed. For example, like this example, laser beam extremely close to mono color can be obtained by using a plurality of Fabry-Perot etalon (hereinafter to be abbreviated as etalon).

Here, explanation is made particularly in the case where two etalons, that is, the etalon for rough tuning 4 and the etalon for fine tuning are inserted into the light resonator. Fig. 2 shows the principle that the oscillation width of laser is narrowed, and a symbol (a) shows a spectroscopy characteristic of the etalon for rough tuning. The peak position λm₁ of each mountain of the spectroscopy characteristic is represented by the following equation (1). 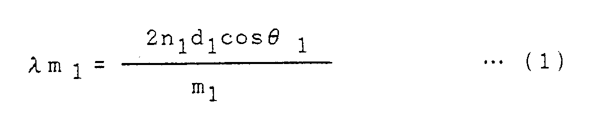
Here, n is the index of refraction of a material existing between two mirrors constructing etalon, d is a distance between the mirrors, ϑ₁ is an angle when light is incident upon etalon, and m is a integer. Peaks correspond to the difference of value of m. As is clear from equation (1), peak wavelength of the mountain can be changed arbitrary by changing the value of n, d, and ϑ. On the other hand, the distance between peaks is called free spectral range (hereinafter to be abbreviated as FSR), and is represented by the following equation (2). 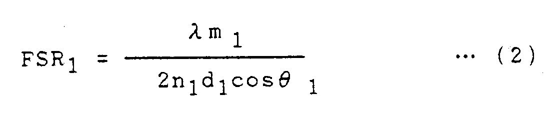
The half band width Δλ₁ of each peak is represented by the following equation (3), 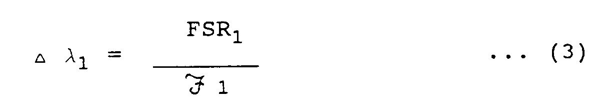
Here is called finesse and is determined by the performance of etalon.

On the other hand, Fig. 2(c) shows the spectroscopy characteristic of gain of a laser medium. When spectroscopy elements do not exist in the light resonator, light is amplified to become laser beam in the range of the existence of the gain. At that time the state that the loss is little at only the position of λ₀ due to the existence of the etalon for rough tuning is realized; therefore light is amplified and oscillated at only the vicinity of the wavelength, by deciding d₁ and the like so that the peak position λm₁ of the etalon for rough tuning is equal to any wavelength λ₀ in the range where gain exists, and the peak other than λm₁ does not come into the wavelength where gain exists.

By the way, the minimum value of the FSR₁ is determined when peak is only one, and finesse is determined by the performance of the etalon, and the finesse is about 20, therefore there is a limit to wavelength width which can be narrowed only by one etalon for rough tuning.

Here, another etalon for fine tuning 5 is used. The spectroscopy characteristic, for example, should be (b) in Fig. 2. At that time, the peak wavelength λm₂ should be λ₀, and FSR₂ should be FSR₂≧Δλ₁.

When the wavelength is desired to be narrower, another etalon may be used.

In this way, the laser beam whose spectroscopy characteristic has originally been like (c) in Fig. 2 is to oscillate only in a narrow range with λ₀ where peak of each etalon overlap each other as a center as shown in Fig. 2(d), by using two etalons. Actually, laser beams pass through etalons numerous times during oscillation, the wavelength width of the laser beam become 1/2 - 1/10 of the wavelength determined by two etalons.

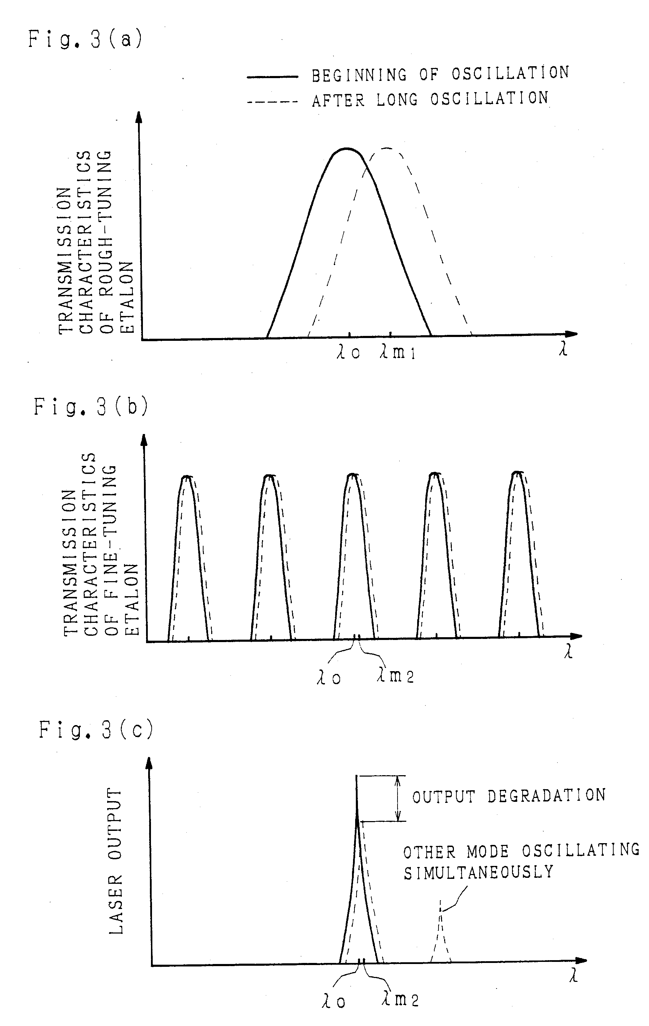

In the way above mentioned, the wavelength of the laser beam can be narrowed as described in the aforesaid magazine, stability in a short duration is improved by making the light resonator better and making the incident angle ϑ small, but stability in a long duration has a thermal problem, especially wavelength shift due to generation of heat when laser beam transmits etalons. This problem is explained referring to Fig. 3.

Fig. 3(a) is the one showing an enlarged spectroscopy characteristic of the etalon for rough tuning, and the solid line shows the spectroscopy characteristic immediately after the oscillation. By the way, generation of heat after the oscillation leads the etalons to deform. The deformation does not degrade the characteristics of etalons, but it changes the gap length of etalons and as a result shifts the wavelength. There is a relationship of equation (4) between the shift quantity and the change of d due to the deformation of etalon.

$\text{Δλ =} \frac{\text{λm}}{\text{d}} \text{Δd (4)}$

Here, the direction of the wavelength shift is determined by the structure of etalon and the like, and wavelength shifts a certain direction due to generation of heat of laser beam when specified etalon is used. The state of shift at that time is shown in a broken line in Fig. 3(a). On the other hand, the etalon for fine tuning also has a similar wavelength shift. The state is as shown in Fig. 3(b). The shift quantity of etalon for fine tuning becomes small by the quantity which is the difference between the etalon distance d₂ and the etalon d₁ when d₂ is bigger than d₁.

The problem at that time is that the peak wavelengths λm₁ and λm₂ of spectroscopy characteristic of two etalons deviate. At the time, light transmission quantity when the two is overlapped is reduced compared with the case where $\text{λm₁ = λm₂}$ . The state of laser oscillation at that time is shown in Fig. 3(c). After a long oscillation, the laser output wavelength-shifts from $\text{λm₁ = λm₂}$ and the output is reduced. When the shift quantity is large, another mode oscillation other than the etalon for fine tuning can occur.

As conventional narrow band width laser device is so constructed as above, it does not have means for compensating the wavelength shift due to thermal problem of etalon and also means for stopping output reduction which occurs when two etalons are used, therefore, it has a problem that it can only be applied to a low output laser whose effect of thermal deformation is small.

According to one aspect of the invention there is provided a laser device comprising a laser oscillator, whose wavelength is variable, which has a Fabry-Perot etalon for fine tuning and a Fabry-Perot etalon for rough tuning for selecting the laser oscillation wavelength in a light resonator, characterised in that there is provided a wavelength monitor system for monitoring the wavelength of the laser beam emitted from the laser oscillator to produce an output signal representative of the oscillation wavelength; a servo system for controlling said Fabry-Perot etalon for fine tuning on the basis of the output signal of said wavelength monitor system; means for determining voltage applied to the laser medium and/or laser output power, and a further servo system for controlling said Fabry-Perot etalon for rough tuning on the basis of the output of said determining means.

According to another aspect of the present invention, there is provided a method of stabilising laser wavelength of a laser oscillator having a variable oscillation wavelength which comprises a first Fabry-Perot etalon for fine tuning and a second Fabry-Perot etalon for rough tuning, the method
comprising determining the oscillation wavelength of the laser beam of the laser oscillator by means of spectroscopy; controlling the first Fabry-Perot etalon to stabilize the wavelength of the laser oscillator by means of the oscillation wavelength; determining the voltage applied to the laser medium and/or the laser output power to control the second Fabry-Perot etalon on the basis thereof, thereby to stabilize the output of the laser oscillator to a desired value.

Embodiments of the method of stabilizing laser wavelength related to the present invention aim to stabilize the wavelength of laser beam by obtaining spectroscopy from a part of laser beam wavelength-selected from two etalons and by controlling one etalon on the basis of analyzed result of laser beam spectrum, and aim to restrict the reduction of laser beam by measuring change of laser output from a part of laser beam and by controlling another etalon according to the analysis of aforesaid output change.

In one embodiments of the laser device with stabilized wavelength related to the invention is provided with a servo system which selects wavelength by being provided with two etalons, that is, the etalon for fine tuning and etalon for rough tuning, leads a part of laser beam taken out of the laser oscillator to a wavelength monitor system to measure oscillation wavelength, and to drive the etalon for fine tuning by aforesaid measured wavelength to vary wavelength, with a power monitor system consisting of a power meter for measuring the variation of laser output independently from the wavelength monitor system and of a part for recording the output variation, and with a servo system for controlling the etalon for rough tuning on the basis of signals from aforesaid power monitor system.

In another embodiment, the laser device with stabilized wavelength is provided with a servo system which selects wavelength by providing two etalons, that is, etalon for fine tuning and the etalon for rough tuning, leads a part of laser beam taken out of the laser oscillator to measure oscillation wavelength, change wavelength by driving the fine tuning etalon according to the first servo system, measure the applied voltage to the laser medium, and to control the etalon for rough tuning on the basis of the variation of measured applied voltage.

A laser device with stabilized wavelength of a further embodiment of the present invention is provided with the servo system which selects wavelength by being provided with two etalons, that is, the etalon for fine tuning and the etalon for rough tuning, leads laser beam taken out of the laser oscillator to the wavelength monitor system to measure the oscillation wavelength, drives the etalon for fine tuning, and with a servo system which measures laser output at the power monitor system, controls applied voltage to the laser medium, to measure applied voltage and to control the etalon for rough tuning on the basis of the analyzed result.

A laser device with stabilized wavelength of another embodiment of the invention is provided with a servo system which selects wavelength by being provided with two etalons, that is, the etalon for fine tuning and the etalon for rough tuning, leads the laser beam taken out of the laser oscillator into the wavelength monitor system to measure oscillation wavelength, drives the etalon for fine tuning by the measured wavelength, and varies wavelength, and further, measures the laser output at the power monitor system, and executes control of applied voltage into the laser medium and control the etalon for rough tuning with time sharing to make the laser output to be constant.

### BRIEF EXPLANATION OF THE DRAWINGS

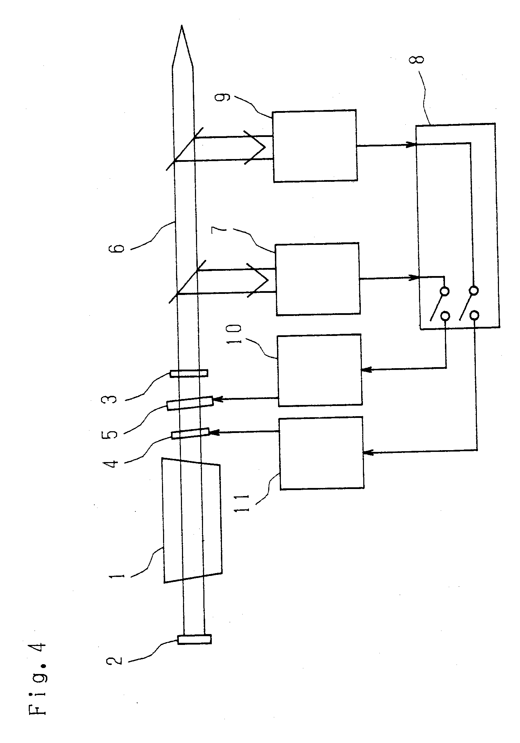

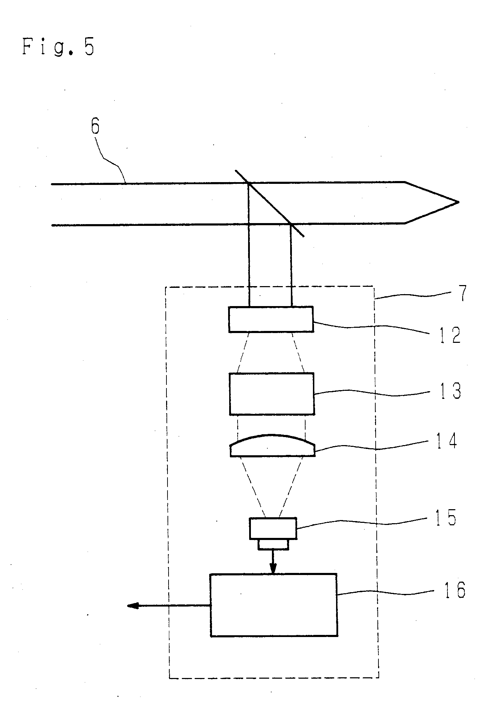

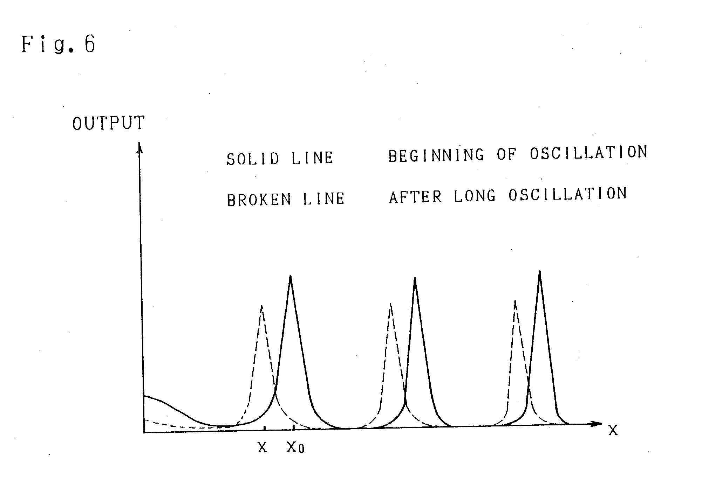

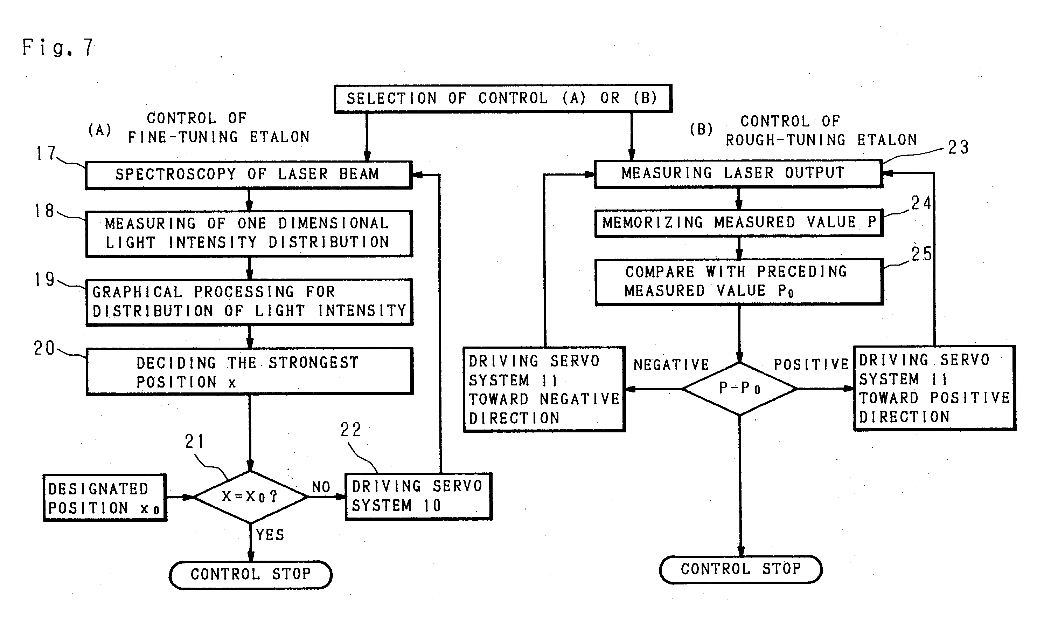

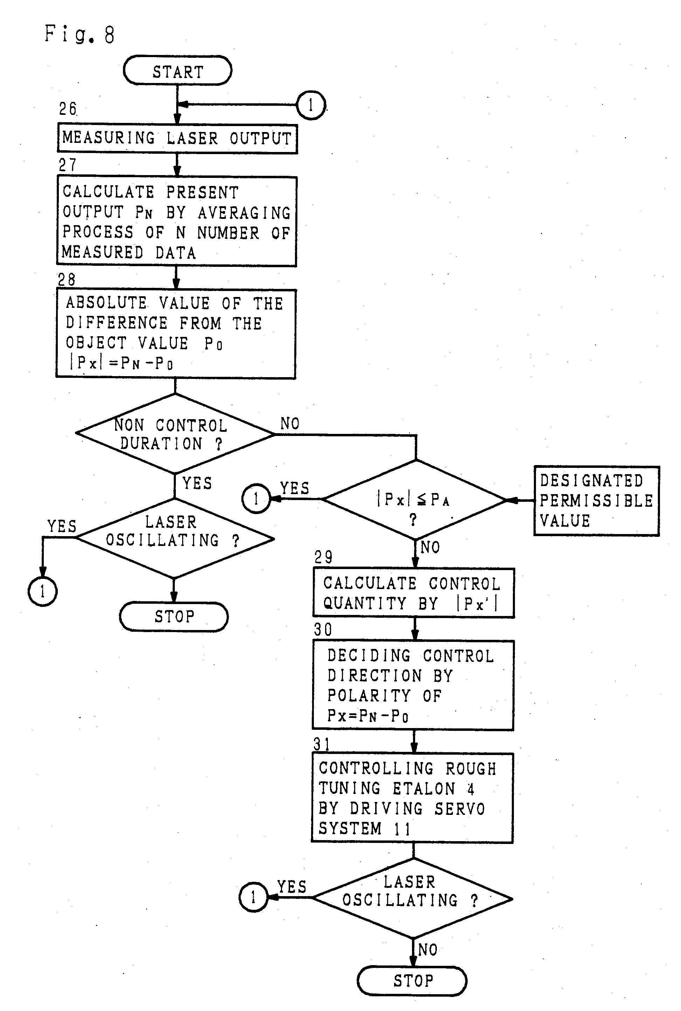

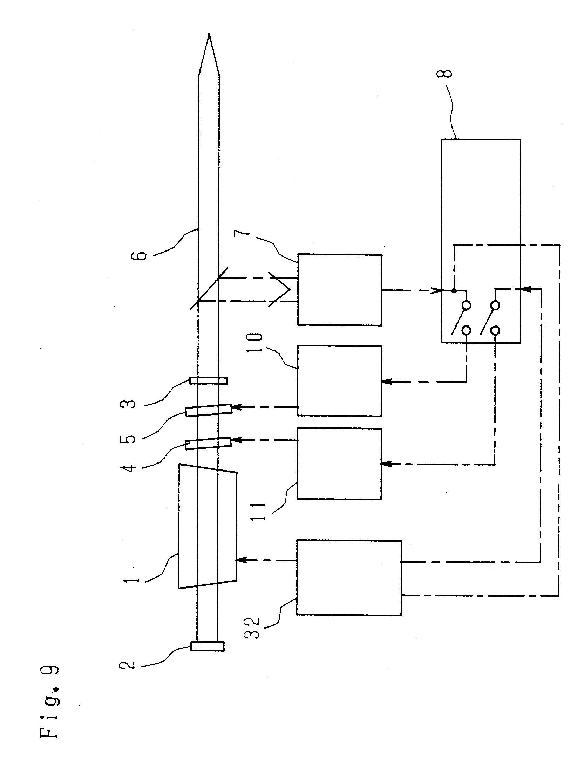

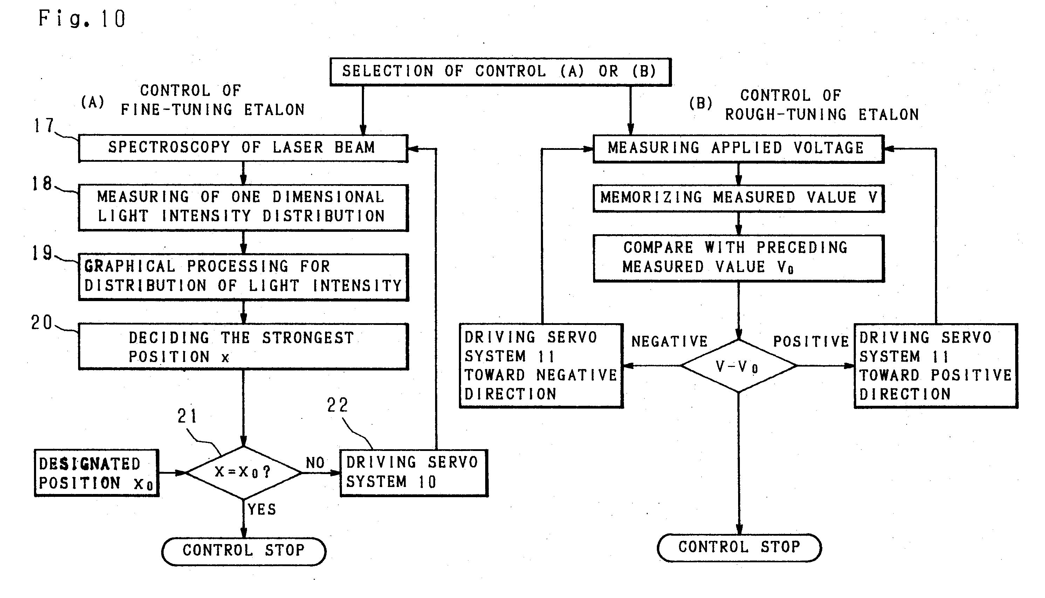

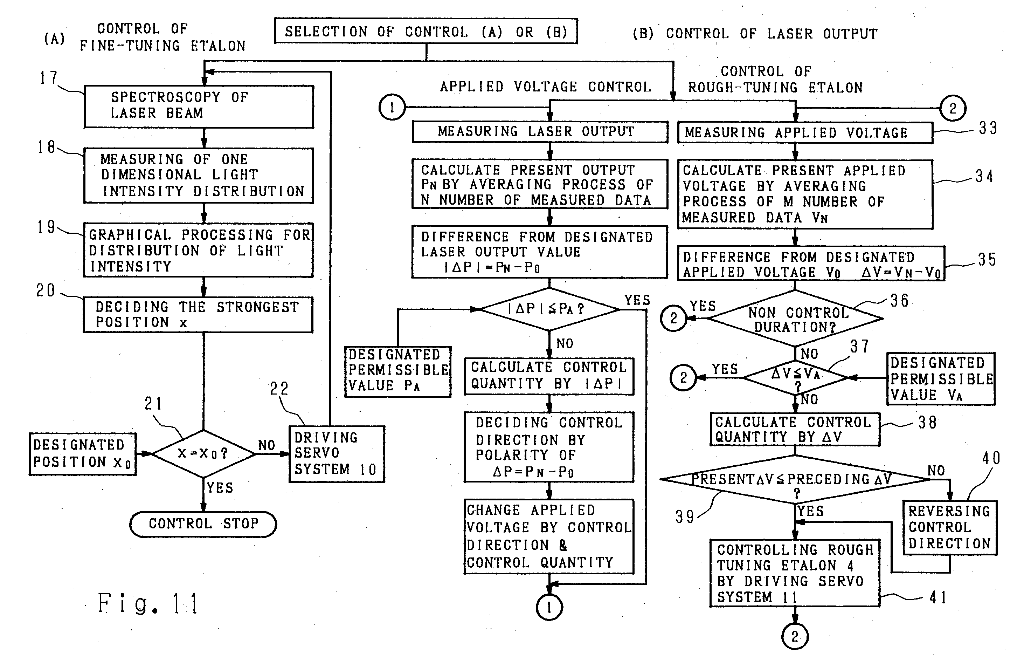

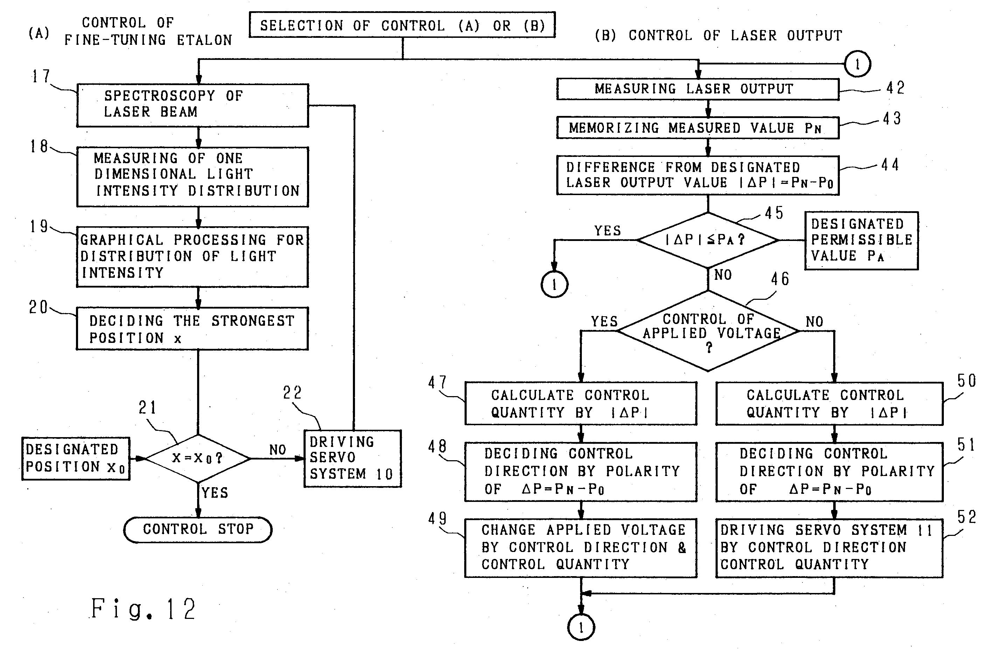

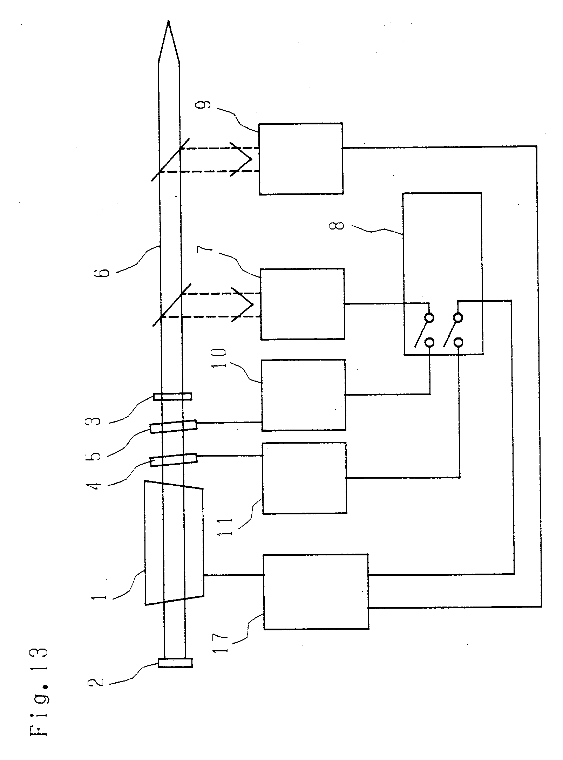

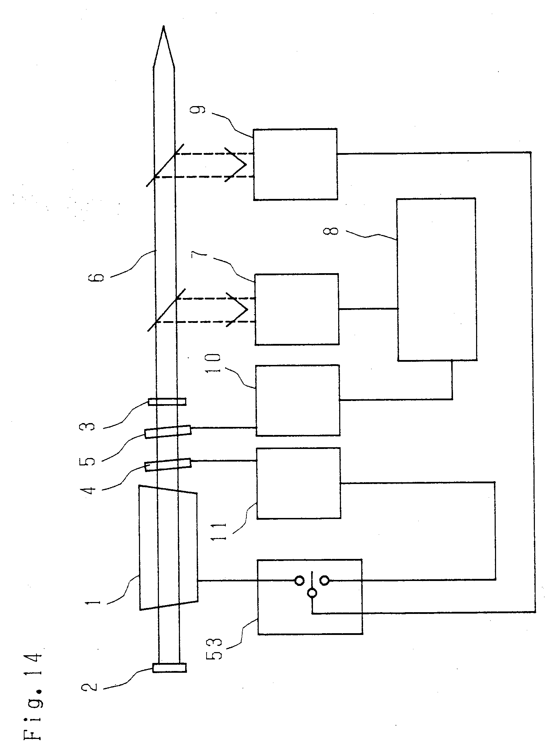

Fig. 1 is a structural view of the conventional narrow band width laser; Fig. 2 is an explanatory view for explaining the deciding method of wavelength due to two etalons; Fig. 3 is an explanatory view explaining that the output variation occurs due to the difference of wavelength shifts of two etalons; Fig. 4 is a structural view showing the wavelength stabilized laser according to one embodiment of the present invention using the wavelength monitor system and the power monitor system; Fig. 5 is a structural view showing the wavelength monitor system; Fig. 6 is a distribution view showing the intensity distribution of interference fringe on the pick up element of the wavelength monitor system; Fig. 7 is a flow chart showing the outline of the method of stabilizing laser wavelength; Fig. 8 is another flow chart showing the outline of the method of stabilizing laser wavelength in the case where the laser device with stabilized wavelength shown in Fig. 4 is used; Fig. 9 is a structural view showing the laser with stabilized wavelength according to another embodiment of the present invention using an applied voltage generating system; Fig. 10 is another flow chart showing the outline of the method of stabilizing laser wavelength in the case where the laser device with stabilized wavelength shown in Fig. 5 is used; Fig. 11 is a flow chart showing parallel control of the laser output; Fig. 12 is a flow chart of the laser output with time sharing; Fig. 13 is the laser device with stabilized wavelength for realizing the flow shown in Fig. 11; and Fig. 14 is the laser device with stabilized wavelength for realizing the flow shown in Fig. 12.

### PREFERRED EMBODIMENTS OF THE INVENTION

Next, explanation is made on one embodiment of the invention referring to drawings. In Fig. 4 and Fig. 5, reference numerals 1 - 5 are the same ones as the conventional. Reference numeral 6 is a laser beam, 7 is a wavelength monitor system, 8 is a control system, 9 is a power monitor system, 10 and 11 are servo systems for controlling etalons, 12 is an integrator, 13 is a Fabry-Perot etalon, 14 is a focusing lens, 15 is a pick up element for observing an interference fringe caused by Fabry-Perot etalon 13 and is, for example, a one dimensional image sensor. 16 is an image processing unit for analyzing the interference fringe.

Next, explanation is given on operation. In the same way as the conventional example, the embodiment of the invention can obtain laser beam 6 of arbitrary wavelength λ₀ which is narrow in oscillation wavelength and in the range where gain exists. But the laser beam with only those characteristics is unstabilized in wavelength and output as described previously, the control system of etalon to be described in the following is required.

First of all, explanation is made on the control system of the etalon for fine tuning.

In Fig. 5, a part of the laser beam 6 is led to the wavelength monitor system. The wavelength monitor system 7 uses, for example, as shown in "IEEE Journal Quantum Electronics QE-14 ('78)17" etalon, prism, grating, Fizeau's interferometer and the like thereby having a function to obtain spectroscopy, but in the embodiment of the invention, as shown in Fig. 5, explanation is given on the case where an etalon and a pick up element are used.

The wavelength monitor system consists of an integrator 12 for weakening and dispersing the laser beam, etalon 13 and a lens 14. Among the diverged components created by the integrator 12, only components having a specified incident angle can transmit etalon and reach to a focusing lens 14. Assuming that the focus distance of the lens is f, the light having a component of ϑ gathers at a position away from the axis of the lens by fϑ on the focus point to form a circular interference fringe. Hereupon, by observing using the pick up element, the position where lights gather, ϑ can be obtained, thereby λ can be calculated according to the equation of transmission wavelength of etalon previously shown.

By the way, light intensity distribution on the pick up element is as shown in Fig. 6. The axis of ordinate shows output, and the axis of abscissa shows a distance f from the center of the interference fringe. Each mountain corresponds to the difference of value m of a degree of etalon. And the distance between each mountain is called free spectral range, and the wavelength can be determined in the range. In addition, as the free spectral range is determined by the design of FP, the wavelength shift should be designed wider than is expected.

And since each mountain has the light intensity distribution corresponding to the wavelength distribution of the laser beam, an image processing unit 16 is required. Further, here, present wavelength λ is calculated, and wavelength adjustment of the oscillator is executed through the servo system 10.

Fig. 7(A) is a flow chart showing the outline of the method of stabilizing laser wavelength, and shows an example of executing control of oscillation wavelength.

In Step 17, spectroscopy is obtained from the laser beam by etalon 13, and in Step 18, one dimensional light intensity distribution is measured by the pick up element. In Step 19, the measured data is blurred, and an image processing is executed such as removing noise and the like. In Step 20, the position x which shows the maximum intensity is compared with the value x₀ (designated position coordinate corresponding to designated wavelength), and when they are different from each other, the etalon for fine tuning 5 is controlled through servo system 10 according to x > x₀ or x < x₀, and the central wavelength λm₂ of the transmission range of the etalon is changed (Step 22), and the processing returns to Step 17 again and repeats the operation until $\text{x = x₀}$ . In the way as the above, oscillation wavelength is kept constant by adjusting the etalon for fine tuning.

Next, explanation is given on the control system of etalon for rough tuning. In Fig. 4, a part of laser beam is introduced into the power monitor 9. The power monitor 9 consists of a part for measuring the laser output and a part for recording the obtained laser output, and when the etalon for rough tuning is controlled in either direction, it determines how to adjust the etalon for rough tuning 4 next. According to the determination, the central wavelength λm₂ of the etalon for rough tuning 4 is adjusted by the servo system 11. The flow chart of this adjustment is shown in Fig. 7(B). When the laser oscillation begins, what is shown in Fig. 3 is created, thereby changing the laser output. Thereupon, in Step 23, the output p is measured, the result thereof being recorded, and in Step 25, the result is compared with the previous measured result p₀. When the outputs are different from each other, the etalon for rough tuning is adjusted by using servo system 11 according to p > p₀ or p < p₀. The process is continued until the etalon for rough tuning 4 reaches heat balance and the laser output is constant.

By the way, the control of two etalons 4 and 5 may be executed simultaneously, but, for example, laser output can be varied on account of moving the central wavelength of the etalon for fine tuning 5 too much, therefore disordered control can accelerate the output change. Thereupon, in order to monitor both of the controls, the control system 8 is provided and make it select the (A) (B) control of the earliest part of the flow chart shown in Fig. 7. In this embodiment, (B) is given a priority immediately after the laser oscillation, and (A) is given a priority after the operation is stabilized to a certain degree. Next, the control of the etalon for rough tuning 4 in the case where an object value (object value < laser maximum output) is set to the laser output, and stabilize the laser output to the object value and noncontrol duration is provided immediately after the oscillation start, is explained referring to the flow chart Fig. 8. First of all, in Step 26, the laser output is measured, and in Step 27, present laser output P_{N} is calculated by the average value processing the N-number times of measured data, and in Step 28, the absolute value |Px| of the difference between the present laser output PN and the laser output object value (value which can be set from exterior) is calculated. Next, whether or not the time from the beginning of the oscillation is within the non-control duration is judged, and if it is within the non-control duration, the etalon for rough tuning 4 is not controlled, and the processing returns to Step 26 after confirming the laser is oscillating. When the time from the beginning of the oscillation exceeds the noncontrol duration, aforesaid |Px| is compared with variation permissive value (the value which can be set from the exterior) of the designated laser output P_{A}, and when |Px| < P_{A}, the control of the etalon for rough tuning is not executed, and the processing returns to Step 26, and when |Px| > P_{A}, in Step 29, the control quantity is calculated by |Px|, and in Step 30, the control direction is determined from the polarity of ${\text{Px = P}}_{\text{N}} \text{- P₀}$ , and in Step 31, the servo system 11 is driven and the etalon for rough tuning 4 is adjusted so that the laser output coincides with the set object value. By continuing the adjustment during the control laser oscillation, stabilization of the laser output for a long time.

The control above described have executed the control of the etalon for rough tuning by monitoring the laser output by means of the power monitor, but as shown in Fig. 9 the control as shown in Fig. 10(B) may be executed using an applied voltage generating system instead of the power monitor. Further, the laser output control may be executed, as shown in Fig. 11, in parallel to both the control of the applied voltage control and the control of the rough etalon, or may be controlled, as shown in Fig. 12, with time sharing. First of all, explanation is given on the parallel control shown in Fig. 11. The device in this case is, for example, shown in Fig. 13.

In the beginning, the control of the applied voltage is explained. First of all, the laser output is measured at the power monitor system 9, the measured data is average-mean-processed N times by an applied voltage generating means 32, thereby calculating the present laser output value P_{N}. Next, the absolute value ${\text{|ΔP| = P}}_{\text{N}} \text{- P₀}$ of the difference between P_{N} and the designated laser output value P₀ (the value which can be set from the exterior) is calculated, then the value |ΔP| is compared with the variation permissive value P_{A} (the value which can be set from the exterior) of the designated laser output, and in the case where |ΔP| ≦ P_{A}, the oscillation is continued with the present applied voltage intact. On the other hand, in the case where |ΔP| > P , the control quantity of the applied voltage is calculated from |ΔP|. Next, the control direction of the applied voltage is determined from the polarity of ${\text{ΔP = P}}_{\text{N}} \text{- P₀}$ , and the applied voltage is controlled so that the laser output become constant according to aforesaid control quantity and control direction.

Next, the control of the etalon for rough tuning is explained. First of all, in Step 33, the applied voltage from the applied voltage generating means 32 to the laser medium is measured by the control system 8.

Next, in Step 34, the measured data is measured M times, is average-mean-processed and the present applied voltage value V_{N} is calculated, and in Step 35, the difference ${\text{ΔV = V}}_{\text{N}} \text{- V₀}$ between V_{N} and the designated object applied voltage value V₀ (the value which can be set from the exterior) is calculated and recorded. But, since the oscillation is unstable immediately after the oscillation, as in Step 36, for the control of the etalon for rough tuning 4, the noncontrol duration is provided, and in the duration, the processing to calculate aforesaid ΔV is executed but the control of the etalon for rough tuning 4 is not executed. When the laser oscillation time exceeds the noncontrol duration, in Step 37, |ΔV| is compared with the variation permissive value V_{A} (the value which can be set from the exterior), and in the case where ΔV ≦ V_{A}, the control of the etalon for rough tuning 4 is not carried out and the oscillation is continued.

On the other hand, in the case where ΔV > V_{A}, in Step 38, the control quantity of the etalon for rough tuning 4 is calculated from the value of ΔV, and in Step 41, the servo system 11 is driven and the etalon for rough tuning 4 is adjusted so that ΔV takes the minimum value. (In the beginning, the control quantity of etalon is changed to the designated control direction, and from the next time, in Step 39, the present ΔV is compared with the previous ΔV. In the case where the present ΔV < the present ΔV, in Step@ 40, the control quantity of the etalon is changed to the opposite direction to the previous direction.) In Step 41, the servo system is driven and the etalon tuning is adjusted.

As described above, the laser output can be controlled constant by continuing the controls of the applied voltage and the etalon for rough tuning 4 by the laser during oscillation.

By the way, the controls of the two etalons 4 and 5 may be executed simultaneously, but there is a possibility, for example, that the laser output varies because of moving the central wavelength of the etalon for fine tuning 5 is moved extremely, and there is also a possibility that the output variation is accelerated when the control is carried out disorderly. Thereupon, in order to monitor both of the controls, a control system 8 is provided and make it to select from (A)(B) controls which is the first part of the flow chart shown in Fig. 4. In this embodiment, (B) is given a priority immediately after the beginning of the laser oscillation, and (A) is given a priority after the operation is stabilized to a certain extent.

Next, explanation is given on time sharing control referring to Fig. 12. The device in this case is, for example, as shown in Fig. 14.

First of all, in Step 42, the laser output is measured by the power monitor system 9, and in Step 43, the measured data is average-mean-processed N times by a time sharing control means 53 to calculate the present laser output value P_{N}. Next, in Step 44, the absolute value |ΔP| of the difference between P_{N} and the designated laser output value P₀ (the value which can be set from the exterior) is calculated, and in Step 45, the value of |ΔP| is compared with the variation permissive value P_{A} (the value which can be set from the exterior), and when |ΔP| > P_{A}, in Step 46, it is judged that whether the applied voltage is controlled with time sharing from the value of the present applied value or the etalon for rough tuning is controlled. For example, in the case where the applied voltage is the preset lower limit voltage and lower, the output is controlled only by the applied voltage, and in the case where the applied voltage is the lower limit voltage and larger and is preset upper limit voltage and higher, the controls of the applied voltage and the etalon for rough tuning are switched in a variable time interval and are controlled alternately. Further, in the case where the applied voltage exceeds the upper limit voltage, the control is carried out so that the output of only the etalon for rough tuning is maximum. In such a way, control is switched depending upon the magnitude of the applied voltage.

And in the case where the applied voltage is controlled, in Step 47, the control quantity of the applied voltage is calculated from |ΔP|, and in next Step 48, it is determined that whether the applied voltage is controlled to increase or to decrease. According to the result, in Step 49, the applied voltage is controlled so that the laser output is constant. And, in the case where the etalon for rough tuning(4)is controlled, in Step 50, the control quantity of the etalon for rough tuning 4 is calculated, and in next Step 51, it is determined that in which polarity the etalon for rough tuning 4 is controlled is determined from the polarity of ${\text{ΔP = P}}_{\text{N}} \text{- P₀}$ , and in Step 52, the etalon for rough tuning 4 is adjusted so that the laser output is constant using the servo system 11. In addition, in the case where |ΔP| ≦ P_{A}, the oscillation is continued intact. By continuing the operation during the oscillation, the laser output is controlled to be constant.

Some embodiments among the above described, etalon is used as wavelength monitor system, spectroscopy such as Fizeau's interferometer, grating, prism, and the like may be used. They have the same effects as aforesaid embodiments by measuring spectro-light intensity distribution.

And in the above embodiments, the method of driving the etalon for fine tuning by calculating the wavelength deviation according to image processing the light intensity distribution of the laser light, but it is without saying that any method capable of doing wavelength monitor, the same effect can be obtained without image processing. As a method of not image processing the light intensity distribution, there is a method, for example, the etalon for fine tuning is controlled by allocating an optical sensor to $\text{x = x₀}$ shown in Fig. 3 and making it as the wavelength monitor system, and by changing the etalon for fine tuning from the optimal state to back and forth, and by anticipating the direction of the most optimal state of the etalon for fine tuning from the changing optimal state of the etalon for fine tuning from the changing extent of light intensity in $\text{x = x₀}$ at that time.

### INDUSTRIAL AVAILABILITY

This invention can be applied to the wavelength stabilizing of laser apparatus, for example, excimer laser device.

## Claims

1. A laser device comprising a laser oscillator, whose wavelength is variable, which has a Fabry-Perot etalon (5) for fine tuning and a Fabry-Perot etalon (4) for rough tuning for selecting the laser oscillation wavelength in a light resonator, characterised in that there is provided a wavelength monitor system (7) for monitoring the wavelength of the laser beam emitted from the laser oscillator to produce an output signal representative of the oscillation wavelength; a servo system (10) for controlling said Fabry-Perot etalon (5) for fine tuning on the basis of the output signal of said wavelength monitor system (7); means (9, 32, 17, 53) for determining voltage applied to the laser medium and/or laser output power, and a further servo system (11) for controlling said Fabry-Perot etalon (4) for rough tuning on the basis of the output of said determining means.

2. A laser device as claimed in claim 1 wherein said determining means comprise a power monitor (9) for measuring the output of said laser beam to analyze variation in the laser output.

3. A laser device as claimed in claim 1 or 2, wherein said determining means comprise a control system for measuring voltage applied to the laser medium to analyze the variation thereon to produce a signal representative thereof.

4. A laser device as claimed in claim 1 wherein said determining means comprise a power monitor system (9) for monitoring the output of said laser beam and a time sharing control means (53) for supplying a control signal to the further servo system for controlling said further Fabry-Perot etalon (4) and also for controlling the voltage applied to the laser medium.

5. A method of stabilizing laser wavelength of a laser oscillator having a variable oscillation wavelength which comprises a first Fabry-Perot etalon (5) for fine tuning and a second Fabry-Perot etalon (4) for rough tuning, the method comprising determining the oscillation wavelength of the laser beam of the laser oscillator by means of spectroscopy; controlling the first Fabry-Perot etalon (5) to stabilize the wavelength of the laser oscillator by means of the oscillation wavelength; determining the voltage applied to the laser medium and/or the laser output power to control the second Fabry-Perot etalon (4) on the basis thereof, thereby to stabilize the output of the laser oscillator to a desired value.

6. A method as claimed in claim 5 wherein the laser output power is measured and the second Fabry-Perot etalon (4) is controlled on the basis of the measurement obtained.

7. A method as claimed in claim 5 or 6 wherein the difference between the power output detected and that desired is determined and the second Fabry-Perot etalon (4) is controlled so that said difference is minimized when the difference exceeds a predetermined variation value for the laser output after a period of non-control by said second Fabry-Perot etalon (4) set for a specified time after commencement of laser oscillation.

8. A method as claimed in claim 5 wherein the applied voltage to the laser medium is measured and the second Fabry-Perot etalon (4) is controlled on the basis of the measurement obtained to stabilize the output of the laser oscillator.

9. A method as claimed in any of claims 5 or 8 wherein the output of said laser beam is measured to control the voltage applied to the laser medium so that the laser output is constant, and the voltage applied is measured to control the second Fabry-Perot etalon (4) on the basis thereof.

10. A method as claimed in claims 5 or 8 wherein the voltage applied to the laser medium is detected to calculate the voltage difference between the applied voltage and that desired and the second Fabry-Perot etalon (4) is controlled so as to minimise said voltage difference.

11. A method as claimed in claim 5 wherein the voltage applied to the laser medium and the laser output power of the laser beam are measured and the voltage applied to the laser medium and the output of the second Fabry-Perot etalon are controlled with time sharing so that the laser output is constant to stabilise the output of the laser oscillator.

## Patentansprüche

1. Laservorrichtung mit einem Laseroszillator mit variabler Wellenlänge, der ein Fabry-Perot-Etalon (5) für die Feinabstimmung und ein Fabry-Perot-Etalon (4) für die Grobabstimmung zur Auswahl der Laseroszillationswellenlänge in einem Lichtresonator aufweist,
**gekennzeichnet durch**
ein Wellenlängenmonitorsystem (7) zur Überwachung der Wellenlänge des von dem Laseroszillator emittierten Laserstrahls, um ein für die Schwingungswellenlänge repräsentatives Ausgangssignal zu erzeugen; ein Servosystem (10) zum Regeln des Fabry-Perot-Etalons (5) für die Feinabstimmung auf der Basis des Ausgangssignals des Wellenlängenmonitorsystems (7); eine Einrichtung (9,32,17,53) zum Bestimmen der dem Lasermedium zugeführten Spannung und/oder der Laserausgangsleistung, und ein weiteres Servosystem (11) zum Regeln des Fabry-Perot-Etalons (4) für die Grobabstimmung auf der Basis des Ausgangssignals der Bestimmungseinrichtung.

2. Laservorrichtung nach Anspruch 1, bei der die Bestimmungseinrichtung eine Leistungsmonitoreinrichtung (9) zum Messen der Ausgangsleistung des Laserstrahls aufweist, um Veränderungen in der Laserausgangsleistung zu analysieren.

3. Laservorrichtung nach Anspruch 1 oder 2, bei der die Bestimmungseinrichtung ein Steuersystem zum Messen der dem Lasermedium zugeführten Spannung aufweist, um deren Veränderung zur Erzeugung eines für diese repräsentativen Signals zu analysieren.

4. Laservorrichtung nach Anspruch 1, bei der die Bestimmungseinrichtung ein Leistungsmonitorsystem (9) zum Messen der Ausgangsleistung des Laserstrahls und eine Zeitteilungssteuereinrichtung (53) aufweist, um dem weiteren Servosystem ein Steuersignal zum Steuern des weiteren Fabry-Perot-Etalons (4) und auch zum Steuern der dem Lasermedium zugeführten Spannung zuzuführen.

5. Verfahren zum Stabilisieren der Laserwellenlänge eines Laseroszillators mit variabler Oszillationswellenlänge, der ein erstes Fabry-Perot-Etalon (5) für die Feinabstimmung und ein zweites Fabry-Perot-Etalon (4) für die Grobabstimmung aufweist, mit den folgenden Verfahrensschritten: Bestimmen der Oszillationswellenlänge des Laserstrahls des Laserozillators durch Spektroskopie; Regeln des ersten Fabry-Perot-Etalons (5) auf der Basis der Oszillationswellenlänge, um die Wellenlänge zu stabilisieren; Bestimmen der dem Lasermedium zugeführten Spannung und/oder der Laserausgangsleistung, um basierend darauf das zweite Fabry-Perot-Etalon (4) zu regeln und dadurch die Ausgangsleistung des Laseroszillators auf einem gewünschten Wert zu stabilisieren.

6. Verfahren nach Anspruch 5, bei dem die Laserausgangsleistung gemessen wird und das zweite Fabry-Perot-Etalon (4) auf der Basis des erhaltenen Meßwertes geregelt wird.

7. Verfahren nach Anspruch 5 oder 6, bei dem die Differenz zwischen der detektierten und der gewünschten Ausgangsleistung bestimmt wird und das zweite Fabry-Perot-Etalon (4) derart geregelt wird, daß die Differenz minimiert wird, wenn die Differenz nach einer Periode der Nicht-Regelung durch das zweite Fabry-Perot-Etalon (4), die für eine bestimmte Zeit nach Beginn der Laseroszillation eingestellt ist, einen vorbestimmten Schwankungswert für den Laserausgang überschreitet.

8. Verfahren nach Anspruch 5, bei dem die dem Lasermedium zugeführte Spannung gemessen und das zweite Fabry-Perot-Etalon (4) auf der Basis des erhaltenen Meßwertes geregelt wird, um die Ausgangsleistung des Laseroszillators zu stabilisieren.

9. Verfahren nach einem der Ansprüche 5 oder 8, bei dem die Ausgangsleistung des Laserstrahls gemessen wird, um die dem Lasermedium zugeführte Spannung derart zu regeln, daß der Laserausgang konstant ist, und die zugeführte Spannung gemessen wird, um basierend darauf das zweite Fabry-Perot-Etalon (4) zu regeln.

10. Verfahren nach Anspruch 5 oder 8, bei dem die dem Lasermedium zugeführte Spannung detektiert wird, um die Spannungsdifferenz zwischen der zugeführten und der gewünschten Spannung zu errechnen, und das zweite Fabry-Perot-Etalon (4) derart geregelt wird, daß die Spannungsdifferenz minimiert wird.

11. Verfahren nach Anspruch 5, bei dem die dem Lasermedium zugeführte Spannung und die Laserausgangsleistung des Laserstrahls gemessen werden und die dem Lasermedium zugeführte Spannung sowie der Ausgang des zweiten Fabry-Perot-Etalons mit Zeitteilung derart geregelt werden, daß der Laserausgang konstant ist, um den Ausgang des Laseroszillators zu stabilisieren.

## Revendications

1. Dispositif laser comportant un oscillateur laser, dont la longueur d'onde est variable, qui possède un étalon de Fabry-Perot (5) pour l'accord fin et un étalon de Fabry-Perot (4) pour l'accord grossier, destiné à sélectionner la longueur d'onde d'oscillation laser d'un résonateur de lumière, caractérisé en ce qu'il est muni d'un système de contrôle de longueur d'onde (7) destiné à contrôler la longueur d'onde du faisceau laser émis par l'oscillateur laser, afin de produire un signal de sortie représentant la longueur d'onde de l'oscillation; un servo-système (10) destiné à commander ledit étalon de Fabry-Perot (5) pour l'accord fin, sur la base du signal de sortie dudit système de contrôle de longueur d'onde (7);des moyens (9, 32, 17, 53) de détermination de la tension appliquée au support du laser et/ou la puissance de sortie du laser, et un autre servo-système (11) destiné à commander ledit étalon de Fabry-Perot (5) pour l'accord grossier, sur la base de la sortie dudit moyen de détermination.

2. Dispositif laser selon la revendication 1, dans lequel lesdits moyen de détermination comportent un dispositif de contrôle de puissance (9) destiné à mesurer la sortie dudit faisceau de laser afin d'analyser la variation de la sortie du laser.

3. Dispositif laser selon la revendication 1 ou 2, dans lequel lesdits moyens de détermination comportent un système de commande destiné à mesurer la tension appliquée au support du laser afin d'analyser sa variation pour produire un signal qui en est représentatif.

4. Dispositif laser selon la revendication 1, dans lequel lesdits moyens de détermination comportent un système de contrôle de puissance (9) destiné à contrôler la sortie dudit faisceau laser et un moyen de commande à temps partagé (53) destiné à fournir un signal de commande à l'autre servo-système afin de commander l'autre dit étalon de Fabry-Perot (4) et de commander également la tension appliquée au support du laser.

5. Procédé de stabilisation l'une longueur d'onde de laser d'un oscillateur laser ayant une longueur d'onde variable, qui comporte un premier étalon de Fabry-Perot (5) pour l'accord fin et un second étalon de Fabry-Perot (4) pour l'accord grossier, le procédé comportant la détermination de la longueur d'onde d'oscillation du faisceau laser de l'oscillateur laser par un moyen de spectroscopie; la commande du premier étalon de Fabry-Perot (5) pour stabiliser la longueur d'onde de l'oscillateur laser au moyen de la longueur d'onde d'oscillation; la détermination de la tension appliquée au support du laser et/ou la puissance de sortie du laser afin de commander le second étalon de Fabry-Perot (4) sur cette base, pour stabiliser la sortie de l'oscillateur laser à une valeur désirée.

6. Procédé selon la revendication 5, dans lequel la puissance de sortie du laser est mesurée et le second étalon de Fabry-Perot (4) est commandé sur la base de la mesure obtenue.

7. Procédé selon la revendication 5 ou 6, dans lequel la différence entre la puissance de sortie détectée et celle qui est désirée est déterminée, et le second étalon de Fabry-Perot (4) est commandé de façon à ce que ladite différence soit minimisée lorsque la différence dépasse une valeur de variation prédéterminée pour la sortie laser après une période sans commande par ledit second étalon de Fabry-Perot (4) fixée pour une durée déterminée après le commencement de l'oscillation laser.

8. Procédé selon la revendication 5, dans lequel la tension appliquée au support du laser est mesurée et le second étalon de Fabry-Perot (4) est commandé sur la base de la mesure obtenue, afin de stabiliser la sortie de l'oscillateur laser.

9. Procédé selon l'une quelconque des revendications 5 ou 8, dans lequel la sortie dudit faisceau laser est mesurée afin de commander la tension appliquée au support du laser pour que la sortie laser soit constante, et la tension appliquée est mesurée afin de commander le second étalon de Fabry-Perot (4) sur cette base.

10. Procédé selon les revendications 5 ou 8, dans lequel la tension appliquée au support du laser est détectée afin de calculer la différence de tension entre la tension appliquée et celle qui est désirée et le second étalon de Fabry-Perot (4) est commandé de façon à minimiser ladite différence de tension.

11. Procédé selon la revendication 5, dans lequel la tension appliquée au support du laser et la puissance de sortie laser du faisceau laser sont mesurées et la tension appliquée au support du laser et la sortie du second étalon de Fabry-Perot sont commandées en temps partagé, afin que la sortie laser soit constante pour stabiliser la sortie de l'oscillateur laser.
